# EUROPEAN PATENT APPLICATION

(11) **EP 4 507 339 A1**
(43) Date of publication of application: **12.02.2025**
(21) Application number: 23784179.6
(22) Date of filing: 24.03.2023
(51) Int. Cl.: H04W 4/02

(54) **POSITIONING REFERENCE SIGNAL (PRS) TRANSMISSION METHOD AND APPARATUS, AND TERMINAL**

(30) Priority: 08.04.2022 CN 202210367864
(71) Applicant: Datang Mobile Communications Equipment Co., Ltd., Beijing 100085 (CN)
(72) Inventor: ZHANG, Huiying, Beijing 100085 (CN); LI, Jianxiang, Beijing 100085 (CN)
(74) Representative: Studio Torta S.p.A.
(86) International application number: PCT/CN2023/083693
(87) International publication number: WO 2023/193615

(57) **Abstract**

The present disclosure is to provide a method, device, and terminal for positioning reference signals (PRS) transmission. The method includes: transmitting, by a first terminal, resource information and/or configuration information of PRS to a second terminal, where the second terminal is in communication with the first terminal via a direct communication interface; and transmitting, by the first terminal, the PRS to the second terminal at the resource location indicated by the resource information and/or configuration information.

## Description

### CROSS-REFERENCE TO RELATED APPLICATION

This application claims a priority of the Chinese patent application No. 202210367864.1 filed on April 8, 2022, which is incorporated herein by reference in its entirety.

### TECHNICAL FIELD

The present disclosure relates to the field of communication technology, in particular to a method, device, and terminal for transmitting positioning reference signals (PRS).

### BACKGROUND

The related technology defines various positioning methods based on the Uu interface, where the basic principle of positioning is to locate a terminal using multiple base stations. For example, in the UpLink Time Difference Of Arrival (UL-TDOA) method, each User Equipment (UE) transmits an uplink Positioning Reference Signal (PRS) to multiple adjacent base stations. A location server then measures the Time Difference of Arrival (TDOA) between signals received by every two adjacent base stations. Based on the locations of the base stations and the relative time differences, the position of the terminal can be calculated.

The positioning methods based on the Uu interface in the related technology are only applicable to scenarios where the UE is in network. When the UE is out of network, it cannot be located using these methods.

### SUMMARY

The purpose of the present disclosure is to provide a method, device, and terminal for positioning reference signals (PRS) transmission, so as to solve the problem of unable to locate an out-of-network UE in related positioning methods.

An embodiment of the present disclosure provides a positioning reference signal (PRS) transmission method, including:
transmitting, by a first terminal, resource information and/or configuration information of PRS to a second terminal, where the second terminal is in communication with the first terminal via a direct communication interface;
transmitting, by the first terminal, the PRS to the second terminal at the resource location indicated by the resource information and/or configuration information.

Optionally, the transmitting resource information and/or configuration information of PRS to the second terminal includes:
transmitting a first target signaling to the second terminal, wherein the first target signaling includes the resource information and/or configuration information;
the first target signaling includes one of the following:
   Sidelink Location Protocol (SLPP) signaling;
   PC5-S signaling;
   PC5 Radio Resource Control (RRC) signaling;
   Media Access Control (MAC) control element (CE); or,
   Sidelink Control Information (SCI).

Optionally, before transmitting the PRS to the second terminal, the method further includes:
receiving feedback information from the second terminal, wherein the feedback information is transmitted by the second terminal upon receiving the resource information and/or configuration information.

Optionally, the resource information and/or configuration information include at least one of the following:
identifier of the PRS;
frequency domain resource information of the PRS;
time domain resource information of the PRS;
transmission period of the PRS;
offset of the PRS;
type of PRS resource;
identifier of the bandwidth part (BWP) where the PRS resource is located;
activation time of the PRS;
valid duration of the PRS;
Quasi co-location (QCL) information of the PRS.

Optionally, the transmission manner of the resource information and/or configuration information includes one of the following:
unicast transmission;
multicast transmission; or,
broadcast transmission.

Optionally, the method further includes:
activating or deactivating a target PRS within the PRSs.

Optionally, activating or deactivating a target PRS within the PRSs includes:
indicating activation of the target PRS through the resource information and/or configuration information;
transmitting a second target signaling to the second terminal, wherein the second target signaling indicates the activation of the target PRS; or,
indicating deactivation of the target PRS through the resource information and/or configuration information;
transmitting a second target signaling to the second terminal, wherein the second target signaling indicates the deactivation of the target PRS.

Optionally, the second target signaling includes at least one of the following information:
resource set identifier of the target PRS;
identifier of the target PRS;
identifier of the BWP where the resource of the target PRS is located;
spatial mapping relationship of the target PRS;
valid duration of the target PRS; or,
number of transmissions of the target PRS.

Optionally, the method further includes:
receiving measurement results and/or location information of the PRS transmitted by the second terminal.

An embodiment of the present disclosure provides a PRS transmission method, including:
receiving, by a second terminal, resource information and/or configuration information of PRS transmitted by a first terminal, wherein the first terminal is in communication with the second terminal via a direct communication interface;
receiving, by the second terminal, the PRS transmitted by the first terminal at the resource location indicated by the resource information and/or configuration information.

Optionally, the receiving resource information and/or configuration information of PRS transmitted by the first terminal includes:
receiving a first target signaling transmitted by the first terminal, wherein the first target signaling includes the resource information and/or configuration information;
the first target signaling includes one of the following:
SLPP signaling;
PC5-S signaling;
RRC signaling;
MAC CE of the direct communication interface; or,
SCI.

Optionally, after receiving the resource information and/or configuration information of the PRS transmitted by the first terminal, the method further includes:
transmitting feedback information to the first terminal.

Optionally, the resource information and/or configuration information include at least one of the following:
identifier of the PRS;
frequency domain resource information of the PRS;
time domain resource information of the PRS;
transmission period of the PRS;
offset of the PRS;
type of PRS resource;
identifier of the bandwidth part (BWP) where the PRS resource is located;
activation time of the PRS;
valid duration of the PRS;
Quasi co-location (QCL) information of the PRS.

Optionally, the method further includes:
determining to activate a target PRS corresponding to the resource information and/or configuration information; or
determining to deactivate a target PRS corresponding to the resource information and/or configuration information.

Optionally, the determining to activate a target PRS corresponding to the resource information and/or configuration information includes:
determining to activate the target PRS according to the resource information and/or configuration information;
receiving a second target signaling transmitted by the first terminal, and determining to activate the target PRS according to the second target signaling;
the determining to deactivate a target PRS corresponding to the resource information and/or configuration information includes:
determining to deactivate the target PRS according to the resource information and/or configuration information;
receiving the second target signaling transmitted by the first terminal, and determining to deactivate the target PRS according to the second target signaling.

Optionally, the second target signaling includes at least one of the following information:
resource set identifier of the target PRS;
identifier of the target PRS;
identifier of the BWP where the resource of the target PRS is located;
spatial mapping relationship of the target PRS;
valid duration of the target PRS; or,
number of transmissions of the target PRS.

Optionally, the method further includes:
measuring, by the second terminal, the PRS and obtaining the measurement results of the PRS.

Optionally, the method further includes:
transmitting measurement results and/or location information of the PRS to the first terminal, wherein the location information is obtained by the second terminal based on the measurement results.

Optionally, the method further includes:
establishing an association relationship between the measurement results and the first terminal.

An embodiment of this disclosure provides a terminal, including: a memory, a transceiver, and a processor; the memory is used to store a computer program; the processor is used to read the computer program stored in the memory; the transceiver is used to transmit and receive data under control of the processor and perform the following steps:
transmitting resource information and/or configuration information of PRS to a second terminal, wherein the second terminal is in communication with the first terminal via a direct communication interface;
transmitting the PRS to the second terminal at the resource location indicated by the resource information and/or configuration information.

Optionally, the transceiver is specifically configured to:
transmit a first target signaling to the second terminal, wherein the first target signaling includes the resource information and/or configuration information;
the first target signaling includes one of the following:
   Sidelink Location Protocol (SLPP) signaling;
   PC5-S signaling;
   PC5 Radio Resource Control (RRC) signaling;
   Media Access Control (MAC) control element (CE); or,
   Sidelink Control Information (SCI).

Optionally, the transceiver is further configured to:
receive feedback information from the second terminal, wherein the feedback information is transmitted by the second terminal upon receiving the resource information and/or configuration information.

Optionally, the resource information and/or configuration information include at least one of the following:
identifier of the PRS;
frequency domain resource information of the PRS;
time domain resource information of the PRS;
transmission period of the PRS;
offset of the PRS;
type of PRS resource;
identifier of the bandwidth part (BWP) where the PRS resource is located;
activation time of the PRS;
valid duration of the PRS;
Quasi co-location (QCL) information of the PRS.

Optionally, the transmission manner of the resource information and/or configuration information includes one of the following:
unicast transmission;
multicast transmission; or,
broadcast transmission.

Optionally, the processor is configured to read the computer program stored in the memory and perform the following steps:
activating or deactivating a target PRS within the PRSs.

Optionally, the processor is configured to read the computer program stored in the memory and perform the following steps:
indicating activation of the target PRS through the resource information and/or configuration information;
transmitting a second target signaling to the second terminal, wherein the second target signaling indicates the activation of the target PRS; or,
indicating deactivation of the target PRS through the resource information and/or configuration information;
transmitting a second target signaling to the second terminal, wherein the second target signaling indicates the deactivation of the target PRS.

Optionally, the second target signaling includes at least one of the following information:
resource set identifier of the target PRS;
identifier of the target PRS;
identifier of the BWP where the resource of the target PRS is located;
spatial mapping relationship of the target PRS;
valid duration of the target PRS; or,
number of transmissions of the target PRS.

Optionally, the transceiver is further configured to:
receive measurement results and/or location information of the PRS transmitted by the second terminal.

An embodiment of this disclosure provides a terminal, including: a memory, a transceiver, and a processor; the memory is used to store a computer program; the processor is used to read the computer program stored in the memory; the transceiver is used to transmit and receive data under control of the processor and perform the following steps:
receiving resource information and/or configuration information of PRS transmitted by a first terminal, wherein the first terminal is in communication with the second terminal via a direct communication interface;
receiving the PRS transmitted by the first terminal at the resource location indicated by the resource information and/or configuration information.

Optionally, the transceiver is configured to:
receiving a first target signaling transmitted by the first terminal, wherein the first target signaling includes the resource information and/or configuration information;
the first target signaling includes one of the following:
SLPP signaling;
PC5-S signaling;
RRC signaling;
MAC CE of the direct communication interface; or,
SCI.

Optionally, the transceiver is further configured to:
transmit feedback information to the first terminal.

Optionally, the resource information and/or configuration information include at least one of the following:
identifier of the PRS;
frequency domain resource information of the PRS;
time domain resource information of the PRS;
transmission period of the PRS;
offset of the PRS;
type of PRS resource;
identifier of the bandwidth part (BWP) where the PRS resource is located;
activation time of the PRS;
valid duration of the PRS;
Quasi co-location (QCL) information of the PRS.

Optionally, the processor is configured to read the computer program stored in the memory and perform the following steps:
determining to activate a target PRS corresponding to the resource information and/or configuration information; or
determining to deactivate a target PRS corresponding to the resource information and/or configuration information.

Optionally, the processor is configured to read the computer program stored in the memory and perform the following steps:
determining to activate the target PRS according to the resource information and/or configuration information;
receiving a second target signaling transmitted by the first terminal, and determining to activate the target PRS according to the second target signaling;
   or,
determining to deactivate the target PRS according to the resource information and/or configuration information;
receiving the second target signaling transmitted by the first terminal, and determining to deactivate the target PRS according to the second target signaling.

Optionally, the second target signaling includes at least one of the following information:
resource set identifier of the target PRS;
identifier of the target PRS;
identifier of the BWP where the resource of the target PRS is located;
spatial mapping relationship of the target PRS;
valid duration of the target PRS; or,
number of transmissions of the target PRS.

Optionally, the processor is configured to read the computer program stored in the memory and perform the following steps:
measuring the PRS and obtaining the measurement results of the PRS.

Optionally, the transceiver is further configured to:
transmitting measurement results and/or location information of the PRS to the first terminal, wherein the location information is obtained by the second terminal based on the measurement results.

Optionally, the processor is configured to read the computer program stored in the memory and perform the following steps:
establishing an association relationship between the measurement results and the first terminal.

According to the embodiments of the present disclosure, a positioning reference signal (PRS) transmission device is provided, the device comprises:
a first transmitting unit for transmitting resource information and/or configuration information of PRS to a second terminal, where the second terminal is in communication with the first terminal via a direct communication interface;
a second transmitting unit for transmitting the PRS to the second terminal at the resource location indicated by the resource information and/or configuration information.

According to the embodiments of the present disclosure, a positioning reference signal (PRS) transmission device is provided, the device comprises:
a first receiving unit for receiving resource information and/or configuration information of PRS transmitted by a first terminal, wherein the first terminal is in communication with the second terminal via a direct communication interface;
a second receiving unit for receiving the PRS transmitted by the first terminal at the resource location indicated by the resource information and/or configuration information.

Embodiments of the present disclosure provide a processor-readable storage medium storing a computer program. The program is executed by a processor so as to implement the above-mentioned positioning reference signal (PRS) transmission method.

The present disclosure at least has the following beneficial effect.

According to the embodiments of the present disclosure, the first terminal transmits resource information and/or configuration information of the PRS to the second terminal, wherein the second terminal is in communication with the first terminal via a direct communication interface. And the PRS is transmitted at the resource location indicated by the resource information and/or configuration information. The second terminal can use the resource information and/or configuration information to receive the corresponding PRS, thereby positioning can be achieved via the direct communication interface between the first and second terminals. This enables positioning of the terminal even when the terminal is out of network.

### BRIEF DESCRIPTION OF THE DRAWINGS

Fig. 1 is a schematic view showing the direct communication.
Fig. 2 is a first schematic flow chart of the PRS transmission method according to an embodiment of the present disclosure;
Fig. 3 is a second schematic flow chart of the PRS transmission method according to an embodiment of the present disclosure;
Fig. 4 is a third schematic flow chart of the PRS transmission method according to an embodiment of the present disclosure;
Fig. 5 is a fourth schematic flow chart of the PRS transmission method according to an embodiment of the present disclosure;
Fig. 6 is a fifth schematic flow chart of the PRS transmission method according to an embodiment of the present disclosure;
Fig. 7 is a sixth schematic flow chart of the PRS transmission method according to an embodiment of the present disclosure;
Fig. 8 is a first schematic structural view of the PRS transmission device according to an embodiment of the present disclosure;
Fig. 9 is a second schematic structural view of the PRS transmission device according to an embodiment of the present disclosure;
Fig. 10 is a first schematic structural view showing the terminal according to an embodiment of the present disclosure;
Fig. 11 is a second schematic structural view showing the terminal according to an embodiment of the present disclosure.

### DETAILED DESCRIPTION

In order to make the technical problem, the technical solutions and the advantages of the present disclosure clearer, the following clearly and completely describes the technical solutions according to the embodiments of the present disclosure with reference to the accompanying drawings. In the following description, specific details such as particular configurations and components are provided solely to aid in a comprehensive understanding of the embodiments of this disclosure. Therefore, it should be clear to those skilled in the art that various changes and modifications can be made to the embodiments described here without departing from the scope and spirit of this disclosure. Additionally, for clarity and conciseness, descriptions of known functions and structures are omitted.

It should be understood that throughout the specification, references to "one embodiment" or "an embodiment" mean that a specific feature, structure, or character described in connection with the embodiment is included in at least one embodiment of this disclosure. Thus, the phrase "in one embodiment" or "in an embodiment" in various places throughout the specification are not necessarily referring to the same embodiment. Furthermore, the specific features, structures, or character may be combined in any suitable manner in one or more embodiments.

In various embodiments of this disclosure, it should be understood that the numbering of the steps does not imply the order of execution, and the sequence of the steps should be determined by their functions and inherent logic and should not impose any limitation on the implementation process of the embodiments of the present disclosure.

The term "and/or" used herein merely refers to an association relationship between objects to be associated and means there are three relationships. For example, A and/or B may represent: only A exists, both A and B exist, and only B exists. The symbol "/" as used herein generally represents there is a "or" relationship between the objects to be associated.

The term "multiple" used herein refers to two or more, and other quantifiers are similar thereto.

The present disclosure will be described hereinafter in a clear and complete manner in conjunction with the drawings and embodiments. Obviously, the following embodiments merely relate to a part of, rather than all of, the embodiments of the present disclosure, and based on these embodiments, a person skilled in the art may, without any creative effort, obtain the other embodiments, which also fall within the scope of the present disclosure.

At first, some concepts involved in the embodiments of the present disclosure will be described hereinafter.

### 1. Direct Communication

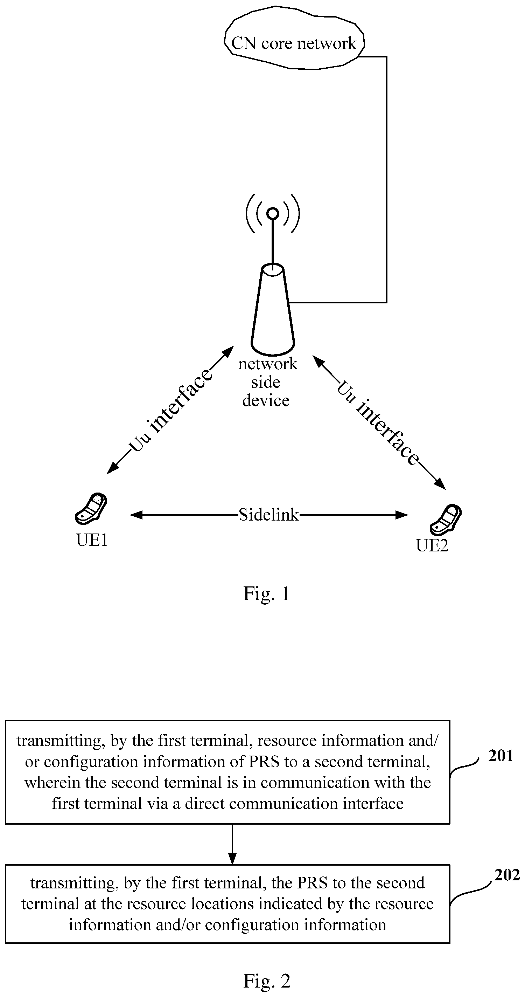

Direct communication refers to a data transmission manner where nearby terminals can communicate over short distances through a direct communication link, also known as a Sidelink. The wireless interface for the Sidelink link is referred to as the direct communication interface or Sidelink interface, as shown in Figure 1.

Specifically, the present disclosure is to provide a method, device, and terminal for positioning reference signals (PRS) transmission, so as to solve the problem of unable to locate an out-of-network UE in related positioning methods.

As shown in Fig. 2, an embodiment of the present disclosure provides a positioning reference signal (PRS) transmission method, applied to a first terminal, the method including:
Step 201, transmitting, by the first terminal, resource information and/or configuration information of PRS to a second terminal, wherein the second terminal is in communication with the first terminal via a direct communication interface.

In the present embodiment, the first terminal and the second terminal are two terminals that communicate via a direct communication interface. Optionally, positioning can be achieved through the direct communication interface between the first terminal and the second terminal. The first terminal transmits the resource information and/or configuration information of the direct communication positioning reference signal to the second terminal. Thus the second terminal receives, upon receiving the resource information and/or configuration information, the PRS at the corresponding resources and performs measuring. The resource information and/or configuration information may indicate the resource location of the PRS to be transmitted by the first terminal.

Step 202, transmitting, by the first terminal, the PRS to the second terminal at the resource locations indicated by the resource information and/or configuration information.

The first terminal transmits the corresponding PRS at the resource locations indicated by the resource information and/or configuration information, where the resource information and/or configuration information may include multiple sets of PRS resource information and/or configuration information. That is, the resource information and/or configuration information may indicate resource locations corresponding to multiple PRS signals. After the first terminal transmits the resource information and/or configuration information to the second terminal, it can transmit one or more PRS indicated by the resource information and/or configuration information at the resource locations indicated by the resource information and/or configuration information.

Optionally, in the embodiments of the present disclosure, the PRS may be a Sidelink (SL) PRS. Optionally, the second terminal receives the PRS at the resource locations indicated by the resource information and/or configuration information, obtains measurement results by measuring the PRS, and may associate the measurement results with the first terminal to calculate the relative position between the second terminal and the first terminal.

In this embodiment, the first terminal transmits the resource information and/or configuration information of the PRS to the second terminal which is in direct communication with the first terminal via a direct communication interface, and transmits the PRS at the resource locations indicated by the resource information and/or configuration information. The second terminal can use the resource information and/or configuration information to receive the corresponding PRS, thereby achieving positioning with the first terminal via the direct communication interface, allowing for a relative positioning of the terminal even when it is out of network.

Optionally, the transmitting resource information and/or configuration information of PRS to the second terminal includes:
transmitting a first target signaling to the second terminal, wherein the first target signaling includes the resource information and/or configuration information;
the first target signaling includes one of the following:
   Sidelink Location Protocol (SLPP) signaling;
   PC5-S signaling;
   PC5 Radio Resource Control (RRC) signaling;
   Media Access Control (MAC) control element (CE); or,
   Sidelink Control Information (SCI).

In the present embodiment, when the first terminal transmits the resource information and/or configuration information to the second terminal, it can transmitted via any of the aforementioned first target signaling which carries the resource information and/or configuration information.

Optionally, before transmitting the PRS to the second terminal, the method further includes: receiving feedback information from the second terminal, wherein the feedback information is transmitted by the second terminal upon receiving the resource information and/or configuration information. In the present embodiment, after the first terminal transmits the resource information and/or configuration information to the second terminal, if the second terminal receives this information, the second terminal can transmit feedback information to the first terminal to indicate that the resource information and/or configuration information has been received by the second terminal.

Optionally, the resource information and/or configuration information include at least one of the following:
identifier of the PRS;
frequency domain resource information of the PRS;
time domain resource information of the PRS;
transmission period of the PRS;
offset of the PRS;
type of PRS resource;
identifier of the bandwidth part (BWP) where the PRS resource is located;
activation time of the PRS;
valid duration of the PRS;
Quasi co-location (QCL) information of the PRS.

In the present embodiment, the resource information and/or configuration information may include one or more of the aforementioned types of information for multiple PRS to indicate the transmission details such as resource locations for multiple PRS. The resource types for PRS may include, for example, aperiodic (i.e., one-time), semi-persistent (which may include period and offset, duration, and number of symbols), periodic (including period and offset), as well as the corresponding spatial mapping relationships.

Optionally, the transmission manner of the resource information and/or configuration information includes one of the following:
unicast transmission;
multicast transmission; or,
broadcast transmission.

In the present embodiment, the cast type for transmitting the PRS resource information and/or configuration information by the first terminal can be unicast, multicast, or broadcast. For unicast transmission, the first terminal and the second terminal need to establish a direct communication unicast connection before the first terminal transmits the PRS resource information and/or configuration information.

Optionally, the method further includes: activating or deactivating a target PRS within the PRSs.

In the present embodiment, when the first terminal transmits the PRS resource information and/or configuration information, the first terminal activate or deactivate the PRS indicated by this information. Specifically, it may activate or deactivate one or more of these PRS, that is, the target PRS may refer to one or more PRS.

Optionally, activating or deactivating a target PRS within the PRSs includes:
Manner 1, indicating activation of the target PRS through the resource information and/or configuration information; or, indicating deactivation of the target PRS through the resource information and/or configuration information.

In the Manner 1, the first terminal implicitly activates or deactivates the target PRS. For example, the SL PRS is activated when the first terminal transmits SL PRS resource information and/or configuration information, or a specific parameter value in the transmitted SL PRS resource information and/or configuration information indicates activation of the SL PRS (e.g., resource type is periodic). In this case, when the second terminal receives the PRS resource information and/or configuration information, it is defaulted to activating the included PRS, or the second terminal determines whether to activate the PRS based on the value of specific parameters in the resource information and/or configuration information.

Manner 2, transmitting a second target signaling to the second terminal, wherein the second target signaling indicates activation or deactivation of the target PRS.

In the manner 2, the first terminal explicitly activates or deactivates the PRS. The first terminal may transmit a second target signaling to the second terminal, such as MAC CE or SCI. Specifically, in a first explicit manner, the first terminal activates or deactivates the PRS through MAC CE; in a second explicit manner, the first terminal activates or deactivates the PRS through SCI. This second target signaling is used to indicate the activation or deactivation of the target PRS.

Optionally, the second target signaling includes at least one of the following information:
resource set identifier of the target PRS;
identifier of the target PRS;
identifier of the BWP where the resource of the target PRS is located;
spatial mapping relationship of the target PRS;
valid duration of the target PRS; or,
number of transmissions of the target PRS.

The second target signaling may carry one or more of the aforementioned types of information to indicate information about the activation or deactivation of the PRS to the second terminal. For example, the second target signaling includes the first PRS identity (Identity Document, ID), the BWP ID of the first PRS, and the transmission number of the first PRS is two, then the second terminal can receive the first PRS twice at the corresponding resource locations based on the information in the second target signaling.

Optionally, the method further includes:
receiving measurement results and/or location information of the PRS transmitted by the second terminal.

In the present embodiment, after the second terminal receives the PRS at the resource locations indicated by the resource information and/or configuration information, the second terminal obtains measurement results of the PRS through measurements. The second terminal may also calculate the relative position between the second terminal and the first terminal based on the measurement results. The second terminal may then transmit the PRS measurement results and/or positioning information to the first terminal, then the first terminal can calculate its relative position and/or absolute position information with respect to the second terminal based on the PRS measurement results.

It should be noted that the first terminal can also act as a PRS receiving terminal, i.e. the second terminal transmits PRS resource information and/or configuration information to the first terminal and transmits the PRS at the resource positions indicated by this information. The first terminal performs measurements on the received PRS to obtain measurement results and can further calculate the relative position and/or absolute position information with respect to the second terminal. The first terminal may use both the PRS measurement results sent by the second terminal and its own measurement results to calculate the relative position and/or absolute position between itself and the second terminal. Specific examples will be provided to illustrate this.

Optionally, the method also includes: receiving second resource information and/or configuration information of a second PRS sent by the second terminal; receiving the second PRS at the resource locations indicated by the second resource information and/or configuration information.

Optionally, the method also includes measuring the second PRS to obtain measurement results for the second PRS.

In the present embodiment, the second terminal also transmits a PRS to the first terminal, the first terminal obtains measurement results based on the received PRS. The first terminal can then compute the position information with respect to the second terminal based on both the measurement results sent by the second terminal and its own measurement results. Note that the terms of the second PRS and the second resource information and/or configuration information in this embodiment serve only to differ from the PRS and resource information and/or configuration information sent from the first terminal to the second terminal. The transmission manner, information content, etc., for the second resource information and/or configuration information of the second PRS are the same as those described for the resource information and/or configuration information sent from the first terminal to the second terminal, and will not be repeated here.

Hereinafter, the implementation process of the positioning reference signal transmission method described in the embodiments of the present disclosure will be explained with specific examples.

As an optional embodiment, assumes the first terminal is UE A and the second terminal is UE B. A unicast transmission of SL PRS resource information and/or configuration information is employed between UE A and UE B, where UE A implicitly activates the SL PRS.

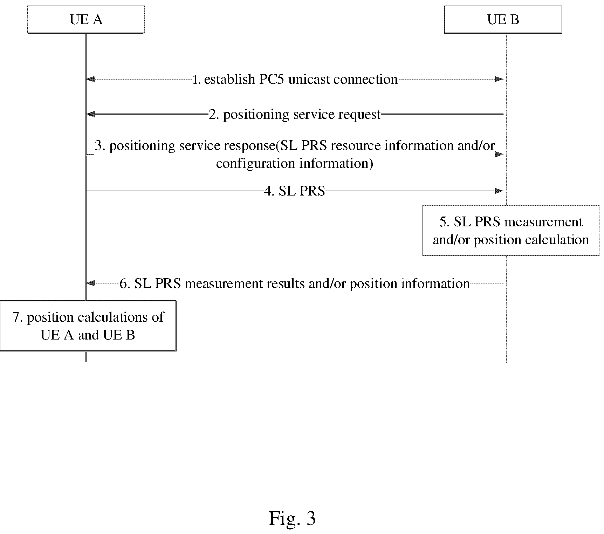

As shown in Figure 3, the process includes:
As shown in Figure 3, the present embodiment includes:
Step 1: Establish a PC5 unicast connection between UE A and UE B.
Step 2: UE B transmits a positioning service request to UE A.
Step 3: UE A transmits a positioning service response to UE B, providing the SL PRS resource information and/or configuration information used by UE A. This SL PRS resource information and/or configuration information indicates periodic transmission of the SL PRS.

Optionally, UE B may transmit a response message back to UE A.

Step 4: UE A transmits the SL PRS signal at the resource locations indicated in Step 3.

Step 5: UE B measures the SL PRS signal at the resource locations indicated in Step 3 and calculates the relative position between UE B and UE A based on the measurement results.

Step 6: UE B transmits the SL PRS signal measurement results and/or position calculation results obtained in Step 5 to UE A.

Step 7: UE A calculates the relative position between UE A and UE B based on the received SL PRS signal measurement results and/or position calculation results, and further calculate the absolute positions of UE A and/or UE B.

It should be noted that UE A periodically transmits the PRS signals at the SL PRS resource locations according to the transmission period indicated in the SL PRS resource information and/or configuration information from Step 3, i.e. Steps 4 to 7 are executed periodically.

The above Steps 2 to 7 describe UE A as the transmitting UE of SL PRS, and UE B as the receiving UE. The same steps can similarly apply to a scenario where UE B is the transmitting UE of SL PRS and UE A is the receiving UE. The positioning calculation between UE A and UE B can be based on unidirectional or bidirectional SL PRS. For positioning calculations based on bidirectional SL PRS, UE A may use the measurement results of SL PRS sent by UE B and its own measurements to calculate the relative and/or absolute positioning between UE A and UE B.

As an optional embodiment, the first terminal is UE A and the second terminal is UE B. UE A and UE B use unicast transmission for SL PRS resource information and/or configuration information. UE A activates the SL PRS explicitly, specifically, UE A activates or deactivates PRS via MAC CE.

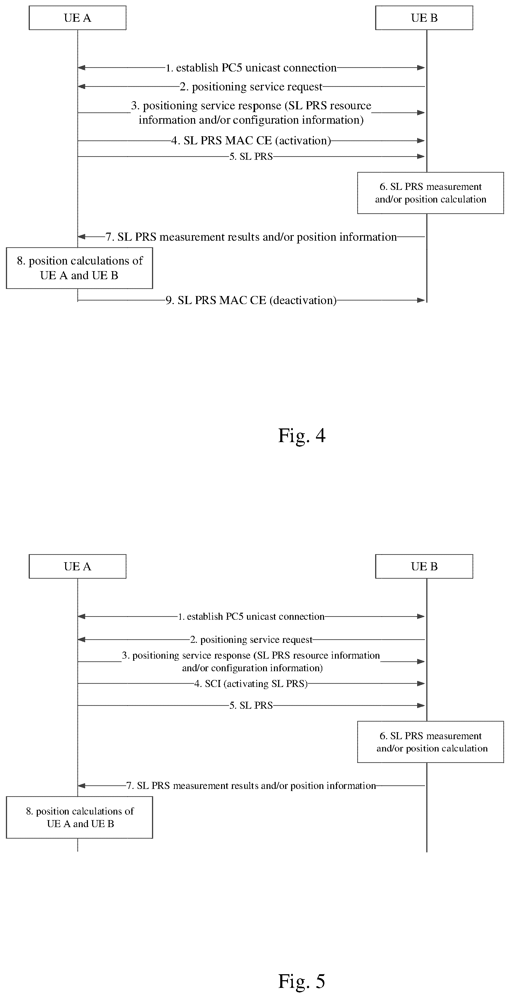

As shown in Figure 4, the method includes:
Step 1: Establish a PC5 unicast connection between UE A and UE B.
Step 2: UE B transmits a positioning request to UE A.
Step 3: UE A transmits its SL PRS resource information and/or configuration information to UE B. The SL PRS resource information and/or configuration information indicates semi-persistent transmission of SL PRS.

Optionally, UE B may transmit a response message back to UE A.

Step 4: UE A transmits an SL PRS MAC CE to UE B, indicating activation of SL PRS transmission. The SL PRS MAC CE may include one or more of the following information: SL PRS resource set ID, resource ID, BWP ID, spatial mapping relationship, or number of PRS transmissions.

Step 5: UE A transmits the SL PRS signal at the resource locations indicated in Step 3.

Step 6: UE B measures the SL PRS signal at the resource locations indicated in Step 3 and calculates the relative position between UE B and UE A based on the measurement results.

Step 7: UE B transmits the SL PRS signal measurement results and/or position calculation results obtained in Step 6 to UE A.

Step 8: UE A calculates the relative position between UE A and UE B based on the received SL PRS signal measurement results and/or position calculation results, and further calculate the absolute positions of UE A and/or UE B.

Step 9: Optionally, UE A transmits an SL PRS MAC CE, including the SL PRS ID, to UE B to indicate deactivation of SL PRS.

It should be noted that after Step 4, UE A periodically transmits PRS signals at the SL PRS resource locations according to the transmission period indicated in the SL PRS resource information and/or configuration information from Step 3, repetitively executing Steps 5 to 8 until reaching the number of SL PRS transmissions indicated in Step 4 or receiving the deactivation SL PRS in Step 9.

The above Steps 2 to 9 describe UE A as the transmitting UE of SL PRS and UE B as the receiving UE. The same steps can similarly apply to a scenario where UE B is the transmitting UE of SL PRS and UE A is the receiving UE. The positioning calculation between UE A and UE B can be based on unidirectional or bidirectional SL PRS. For positioning calculations based on bidirectional SL PRS, UE A uses the measurement results of SL PRS sent by UE B and its own measurements to calculate the relative and/or absolute positioning between UE A and UE B.

As an optional embodiment, assume the first terminal is UE A and the second terminal is UE B. UE A and UE B use unicast transmission for SL PRS resource information and/or configuration information. UE A activates the SL PRS explicitly, specifically, UE A activates or deactivates PRS via SCI.

As shown in Figure 5, the method includes:
Step 1: establish a PC5 unicast connection between UE A and UE B.
Step 2: UE B transmits a positioning request to UE A.
Step 3: UE A transmits its SL PRS resource information and/or configuration information to UE B. The SL PRS resource information and/or configuration information indicates aperiodic transmission of SL PRS.

Optionally, UE B may transmit a response message back to UE A.

Step 4: UE A transmits an SL PRS SCI to UE B, indicating activation of SL PRS transmission.

Step 5: UE A transmits the SL PRS signal at the resource locations indicated in Step 3.

Step 6: UE B measures the SL PRS signal at the resource locations indicated in Step 3 and calculates the relative position between UE B and UE A based on the measurement results.

Step 7: UE B transmits the SL PRS signal measurement results and/or position calculation results obtained in Step 6 to UE A.

Step 8: UE A calculates the relative position between UE A and UE B based on the received SL PRS signal measurement results and/or position calculation results, and further calculates the absolute positions of UE A and/or UE B.

It should be noted that the above Steps 2 to 8 describe UE A as the transmitting UE of SL PRS and UE B as the receiving UE. Similarly, these steps can also apply to a scenario where UE B is the transmitting UE of SL PRS and UE A is the receiving UE. The positioning calculation between UE A and UE B can be based on unidirectional or bidirectional SL PRS. For positioning calculations based on bidirectional SL PRS, UE A uses the measurement results of SL PRS sent by UE B and its own measurements to calculate the relative and/or absolute positions between UE A and UE B.

As an optional embodiment, assume the first terminal is UE A and the second terminal is UE B, and UE A and UE C are capable of performing location positioning via direct communication interface. UE A uses multicast/broadcast transmission for SL PRS resource information and/or configuration information to implicitly activate SL PRS. UE C is also a terminal that can perform positioning with UE A through a direct communication interface.

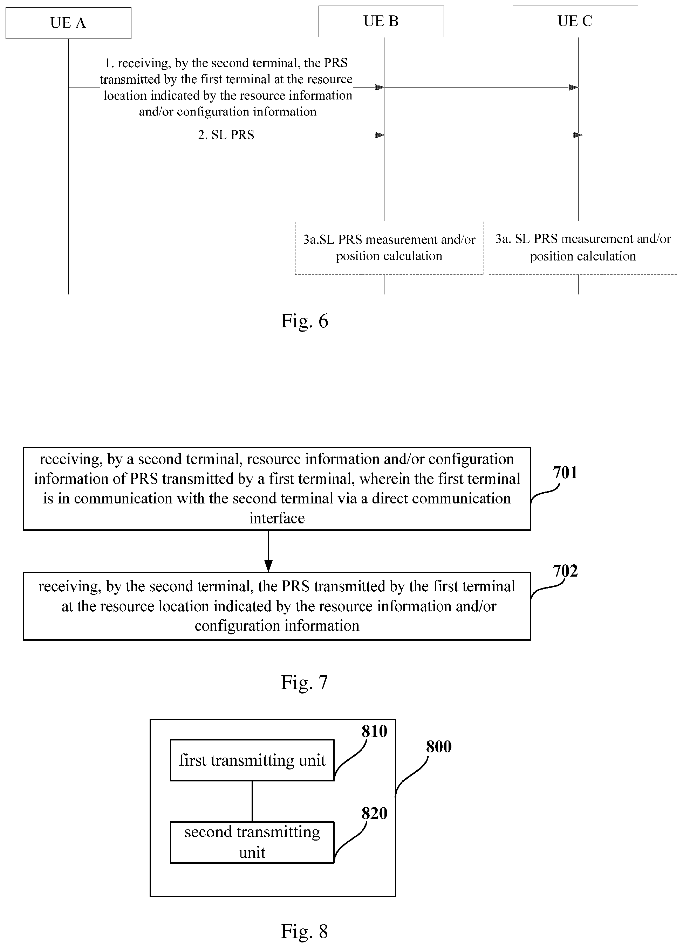

As shown in Figure 6, the method includes:
Step 1: UE A broadcasts or multicasts the SL PRS resource information and/or configuration information to UE B and UE C. The SL PRS resource information and/or configuration information indicates periodic transmission of SL PRS.

Optionally, UE B may transmit a response message back to UE A.

Step 2: UE A transmits the SL PRS signal at the resource locations indicated in Step 1.

Steps 3a and 3b: UE B and UE C measure the SL PRS signal at the resource locations indicated in Step 1 and calculate the relative position between UE B and UE A, as well as the relative position between UE C and UE A, based on the measurement results.

Once UE B and UE C obtained the respective relative positioning results with respect to UE A, they transmit the SL PRS signal measurement results and/or position calculation results obtained in Steps 3a and 3b to UE A. UE A calculates the relative position between UE A and UE B, as well as between UE A and UE C, based on the received SL PRS signal measurement results and/or position calculation results, and further calculates the absolute positions of UE A, UE B, and UE C.

It should be noted that UE A can periodically execute Step 1, i.e. UE A periodically transmits SL PRS resource information and/or configuration information.

UE A periodically transmits SL PRS signals at the resource locations according to the period indicated in Step 1, i.e. executing Steps 2, 3a, and 3b periodically.

In the present embodiment, as the transmitting terminal of direct communication positioning signals, the first terminal transmits specific resource information and/or configuration information such as time-frequency resources, periods, etc., necessary for transmitting SL PRS to the second terminal, which serves as the receiving terminal. The first terminal transmits SL PRS signals at the indicated resources. Upon receiving the SL PRS resource information and/or configuration information from the first terminal, the second terminal measures the SL PRS signals at the resources indicated by the SL PRS resource information and/or configuration information and associates the measurement results with the first terminal, thereby enabling positioning based on the direct communication interface.

In the present embodiment, the first terminal transmits the resource information and/or configuration information of the PRS to the second terminal which is in direct communication with the first terminal via a direct communication interface, and transmits the PRS at the resource locations indicated by the resource information and/or configuration information. The second terminal can use the resource information and/or configuration information to receive the corresponding PRS, thereby achieving positioning with the first terminal via the direct communication interface, allowing for a relative positioning of the terminal even when it is out of network.

As shown in Fig. 7, an embodiment of the present disclosure provides a PRS transmission method, applied to a second terminal, the method includes:
Step 701, receiving, by the second terminal, resource information and/or configuration information of PRS transmitted by a first terminal, wherein the first terminal is in communication with the second terminal via a direct communication interface;
Step 702, receiving, by the second terminal, the PRS transmitted by the first terminal at the resource location indicated by the resource information and/or configuration information.

The second terminal is a terminal that communicates with the first terminal via a direct communication interface. Optionally, positioning between the second terminal and the first terminal can be achieved via the direct communication interface. The first terminal transmits the resource information and/or configuration information of the direct communication positioning reference signal used by the first terminal to the second terminal. Upon receiving the PRS resource information and/or configuration information transmitted by the first terminal, the second terminal performs receiving measurement of the PRS on the corresponding resources. The resource information and/or configuration information may indicate the resource locations of the PRS to be transmitted by the first terminal.

The resource information and/or configuration information may include multiple sets of PRS resource information and/or configuration information. That is, the resource information and/or configuration information may indicate resource locations corresponding to multiple PRS signals. After the first terminal transmits the resource information and/or configuration information to the second terminal, it can transmit one or more PRS indicated by the resource information and/or configuration information at the resource locations indicated by the resource information and/or configuration information.

In the embodiments of the present disclosure, the second terminal receives the resource information and/or configuration information of the PRS transmitted by the first terminal which is in direct communication with the second terminal via a direct communication interface, and receives the PRS at the resource locations indicated by the resource information and/or configuration information. The second terminal can use the resource information and/or configuration information to receive the corresponding PRS, thereby achieving positioning with the first terminal via the direct communication interface, allowing for a relative positioning of the terminal even when it is out of network.

Optionally, the receiving resource information and/or configuration information of PRS transmitted by the first terminal includes:
receiving a first target signaling transmitted by the first terminal, wherein the first target signaling includes the resource information and/or configuration information;
the first target signaling includes one of the following:
SLPP signaling;
PC5-S signaling;
RRC signaling;
MAC CE of the direct communication interface; or,
SCI.

In the present embodiment, when the first terminal transmits the resource information and/or configuration information to the second terminal, it can transmitted via any of the aforementioned first target signaling which carries the resource information and/or configuration information, and the second terminal receives the first target signaling transmitted by the first terminal

Optionally, after receiving the resource information and/or configuration information of the PRS transmitted by the first terminal, the method further includes: transmitting feedback information to the first terminal. In the embodiment, after the first terminal transmits the resource information and/or configuration information to the second terminal, the second terminal may transmit a feedback information to the first terminal upon receiving the resource information and/or configuration information, so as to indicates that the second terminal has received the resource information and/or configuration information.

Optionally, the resource information and/or configuration information include at least one of the following:
identifier of the PRS;
frequency domain resource information of the PRS;
time domain resource information of the PRS;
transmission period of the PRS;
offset of the PRS;
type of PRS resource;
identifier of the bandwidth part (BWP) where the PRS resource is located;
activation time of the PRS;
valid duration of the PRS;
Quasi co-location (QCL) information of the PRS.

In the present embodiment, the resource information and/or configuration information may include one or more of the aforementioned types of information for multiple PRS to indicate the transmission details such as resource locations for multiple PRS. The resource types for PRS may include, for example, aperiodic (i.e., one-time), semi-persistent (which may include period and offset, duration, and number of symbols), periodic (including period and offset), as well as the corresponding spatial mapping relationships.

Optionally, the transmission manner of the resource information and/or configuration information includes one of the following:
unicast transmission;
multicast transmission; or,
broadcast transmission.

In the present embodiment, the cast type for transmitting the PRS resource information and/or configuration information by the first terminal can be unicast, multicast, or broadcast. For unicast transmission, the first terminal and the second terminal need to establish a direct communication unicast connection before the first terminal transmits the PRS resource information and/or configuration information.

Optionally, the method further includes: determining activating or deactivating a target PRS within the PRSs corresponding to the resource information and/or configuration information. For example, when the target PRS is determined to be activated, the second terminal may receive the target PRS at the resource locations indicated by the resource information and/or configuration information. Specifically, the first terminal may activate or deactivate one or more of these PRS, that is, the target PRS may refer to one or more PRS.

Optionally, activating or deactivating the target PRS within the PRSs corresponding to the resource information and/or configuration information includes:
Manner 1, determining activating or deactivating the target PRS according to the resource information and/or configuration information.

In the Manner 1, the first terminal implicitly activates or deactivates the target PRS. For example, the SL PRS is activated when the first terminal transmits SL PRS resource information and/or configuration information, or a specific parameter value in the transmitted SL PRS resource information and/or configuration information indicates activation of the SL PRS (e.g., resource type is periodic). In this case, when the second terminal receives the PRS resource information and/or configuration information, it is defaulted to activating the included PRS, or the second terminal determines whether to activate the PRS based on the value of specific parameters in the resource information and/or configuration information.

Manner 2, receiving a second target signaling transmitted by the first terminal, and determining activating or deactivating the target PRS according to the second target signaling.

In the manner 2, the first terminal explicitly activates or deactivates the PRS. The first terminal may transmit a second target signaling to the second terminal, such as MAC CE or SCI. Specifically, in a first explicit manner, the first terminal activates or deactivates the PRS through MAC CE; in a second explicit manner, the first terminal activates or deactivates the PRS through SCI. The second terminal determines activating or deactivating the target PRS according to the received second target signaling.

Optionally, the second target signaling includes at least one of the following information:
resource set identifier of the target PRS;
identifier of the target PRS;
identifier of the BWP where the resource of the target PRS is located;
spatial mapping relationship of the target PRS;
valid duration of the target PRS; or,
number of transmissions of the target PRS.

The second target signaling may carry one or more of the aforementioned types of information. For example, the second target signaling includes the first PRS identity (Identity Document, ID), the BWP ID of the first PRS, and the transmission number of the first PRS is two, then the second terminal can receive the first PRS twice at the corresponding resource locations based on the information in the second target signaling.

Optionally, the method further includes: measuring the PRS by the second terminal to obtain the measurement results of the PRS.

In the present embodiment, after the second terminal receives the PRS at the resource locations indicated by the resource information and/or configuration information, the second terminal obtains measurement results of the PRS through measurements. The second terminal may also calculate the relative position between the second terminal and the first terminal based on the measurement results.

Optionally, the method further includes: transmitting, by the second terminal, the PRS measurement results and/or positioning information to the first terminal, wherein the position information is obtained by the second terminal according to the measurement results. The first terminal can calculate its relative position and/or absolute position information with respect to the second terminal based on the PRS measurement results.

Optionally, the method further includes establishing an association between the measurement results and the first terminal. After obtaining the PRS measurement results, the second terminal establishes the association between the measurement results and the first terminal in order to calculate the relative position and/or absolute position information with respect to the first terminal.

It should be noted that the first terminal can also act as a PRS receiving terminal, i.e. the second terminal transmits PRS resource information and/or configuration information to the first terminal and transmits the PRS at the resource positions indicated by this information. The first terminal performs measurements on the received PRS to obtain measurement results and can further calculate the relative position and/or absolute position information with respect to the second terminal. The second terminal may use both the PRS measurement results sent by the first terminal and its own measurement results to calculate the relative position and/or absolute position between the first terminal and the second terminal. Specific examples will be provided to illustrate this.

Optionally, the method also includes: receiving second resource information and/or configuration information of a second PRS sent by the second terminal; receiving the second PRS at the resource locations indicated by the second resource information and/or configuration information.

Optionally, the method also includes:
transmitting second resource information and/or configuration information of the second PRS to the first terminal;
transmitting the second PRS to the first terminal at the resource locations indicated by the second resource information and/or configuration information.

In the present embodiment, the second terminal also transmits a PRS to the first terminal, the first terminal obtains measurement results based on the received PRS. Note that the terms of the second PRS and the second resource information and/or configuration information in this embodiment serve only to differ from the PRS and resource information and/or configuration information sent from the first terminal to the second terminal. The transmission manner, information content, etc., for the second resource information and/or configuration information of the second PRS are the same as those described for the resource information and/or configuration information sent from the first terminal to the second terminal, and will not be repeated here.

In the present embodiment, the implementation process of the positioning reference signal transmission method can be referred to in the method embodiments applied to the first terminal and will not be elaborated here.

In the embodiments of the present disclosure, the second terminal receives the resource information and/or configuration information of the PRS transmitted by the first terminal which is in direct communication with the second terminal via a direct communication interface, and receives the PRS at the resource locations indicated by the resource information and/or configuration information. The second terminal can use the resource information and/or configuration information to receive the corresponding PRS, thereby achieving positioning with the first terminal via the direct communication interface, allowing for a relative positioning of the terminal even when it is out of network.

The above embodiments provide an introduction to the positioning reference signal transmission method of the present disclosure. The following description of the present embodiment will further illustrate the corresponding device with reference to the accompanying drawings.

As shown in Fig. 8, according to the embodiments of the present disclosure, a positioning reference signal (PRS) transmission device 800 is provided, the device comprises:
a first transmitting unit 810, for transmitting resource information and/or configuration information of PRS to a second terminal, where the second terminal is in communication with the first terminal via a direct communication interface;
a second transmitting unit 820, for transmitting the PRS to the second terminal at the resource location indicated by the resource information and/or configuration information.

Optionally, the first transmitting unit is specifically configured to:
transmit a first target signaling to the second terminal, wherein the first target signaling includes the resource information and/or configuration information;
the first target signaling includes one of the following:
   Sidelink Location Protocol (SLPP) signaling;
   PC5-S signaling;
   PC5 Radio Resource Control (RRC) signaling;
   Media Access Control (MAC) control element (CE); or,
   Sidelink Control Information (SCI).

Optionally, the device further includes a third receiving unit, configured to receive feedback information from the second terminal, wherein the feedback information is transmitted by the second terminal upon receiving the resource information and/or configuration information.

Optionally, the resource information and/or configuration information include at least one of the following:
identifier of the PRS;
frequency domain resource information of the PRS;
time domain resource information of the PRS;
transmission period of the PRS;
offset of the PRS;
type of PRS resource;
identifier of the bandwidth part (BWP) where the PRS resource is located;
activation time of the PRS;
valid duration of the PRS;
Quasi co-location (QCL) information of the PRS.

Optionally, the transmission manner of the resource information and/or configuration information includes one of the following:
unicast transmission;
multicast transmission; or,
broadcast transmission.

Optionally, the device further includes a first processing unit for activating or deactivating a target PRS within the PRSs.

Optionally, the first processing unit is configured to perform the following steps:
indicating activation of the target PRS through the resource information and/or configuration information;
transmitting a second target signaling to the second terminal, wherein the second target signaling indicates the activation of the target PRS; or,
indicating deactivation of the target PRS through the resource information and/or configuration information;
transmitting a second target signaling to the second terminal, wherein the second target signaling indicates the deactivation of the target PRS.

Optionally, the second target signaling includes at least one of the following information:
resource set identifier of the target PRS;
identifier of the target PRS;
identifier of the BWP where the resource of the target PRS is located;
spatial mapping relationship of the target PRS;
valid duration of the target PRS; or,
number of transmissions of the target PRS.

Optionally, the device further includes a fourth receiving unit, configured to receive measurement results and/or location information of the PRS transmitted by the second terminal.

It should be noted that the device provided in the present embodiment of the present disclosure is capable of implementing all the method steps realized by the method embodiments applied to the first terminal and can achieve the same technical effects. Therefore, the parts of the embodiment that are identical to the method embodiments and their beneficial effects are not repeated here.

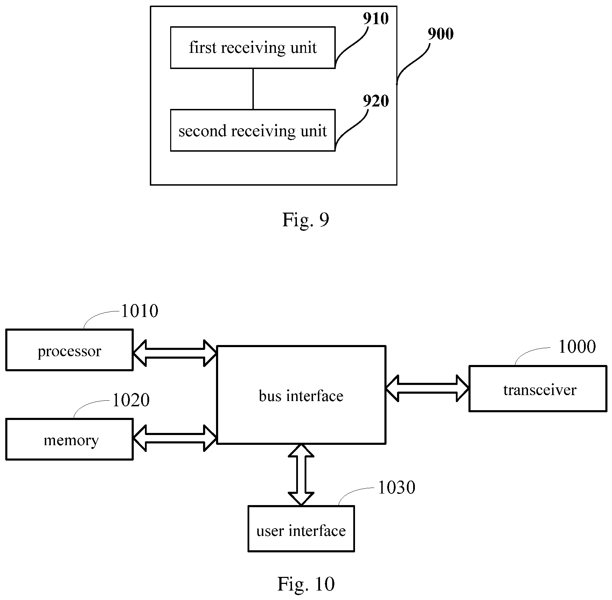

As shown in Fig. 9, according to the embodiments of the present disclosure, a positioning reference signal (PRS) transmission device 900 is provided, the device comprises:
a first receiving unit 910 for receiving resource information and/or configuration information of PRS transmitted by a first terminal, wherein the first terminal is in communication with the second terminal via a direct communication interface;
a second receiving unit 920 for receiving the PRS transmitted by the first terminal at the resource location indicated by the resource information and/or configuration information.

Optionally, the first receiving unit is configured to:
receiving a first target signaling transmitted by the first terminal, wherein the first target signaling includes the resource information and/or configuration information;
the first target signaling includes one of the following:
SLPP signaling;
PC5-S signaling;
RRC signaling;
MAC CE of the direct communication interface; or,
SCI.

Optionally, the device further includes a third transmitting unit, configured to transmit feedback information to the first terminal.

Optionally, the resource information and/or configuration information includes at least one of the following:
identifier of the PRS;
frequency domain resource information of the PRS;
time domain resource information of the PRS;
transmission period of the PRS;
offset of the PRS;
type of PRS resource;
identifier of the bandwidth part (BWP) where the PRS resource is located;
activation time of the PRS;
valid duration of the PRS;
Quasi co-location (QCL) information of the PRS.

Optionally, the device further includes a first determining unit for determining to activate a target PRS corresponding to the resource information and/or configuration information; or
determining to deactivate a target PRS corresponding to the resource information and/or configuration information.

Optionally, the first determining unit is configured to perform the following steps:
determining to activate the target PRS according to the resource information and/or configuration information;
receiving a second target signaling transmitted by the first terminal, and determining to activate the target PRS according to the second target signaling;
   or,
determining to deactivate the target PRS according to the resource information and/or configuration information;
receiving the second target signaling transmitted by the first terminal, and determining to deactivate the target PRS according to the second target signaling.

Optionally, the second target signaling includes at least one of the following information:
resource set identifier of the target PRS;
identifier of the target PRS;
identifier of the BWP where the resource of the target PRS is located;
spatial mapping relationship of the target PRS;
valid duration of the target PRS; or,
number of transmissions of the target PRS.

Optionally, the device further includes a second processing unit for measuring the PRS and obtaining the measurement results of the PRS.

Optionally, the device further includes a fourth transmitting unit for transmitting measurement results and/or location information of the PRS to the first terminal, wherein the location information is obtained by the second terminal based on the measurement results.

Optionally, the device further includes a third processing unit for establishing an association relationship between the measurement results and the first terminal.

It should be noted that the device provided in the present embodiment of the present disclosure is capable of implementing all the method steps realized by the method embodiments applied to the second terminal and can achieve the same technical effects. Therefore, the parts of the embodiment that are identical to the method embodiments and their beneficial effects are not repeated here.

It should be appreciated that, the units in the embodiments of the present disclosure are for illustrative purposes, and they are provided merely on the basis of their logic functions. The units may be integrated in a processing unit, or physically separated from each other, or two or more units may be integrated in one unit. The integrated units may be implemented in the form of hardware or a software functional unit.

In the case that the functional units are implemented in a software form and sold or used as a separate product, they may be stored in a computer-readable medium. Based on this, the technical solutions of the present disclosure, partial or full, or parts of the technical solutions of the present disclosure contributing to the related art, may appear in the form of software products, which may be stored in a storage medium and include several instructions so as to enable computer equipment (a personal computer, a server or network equipment) to execute all or parts of the steps of the method according to the embodiments of the present disclosure. The storage medium includes any medium capable of storing therein program codes, e.g., a universal serial bus (USB) flash disk, a mobile hard disk (HD), a read-only memory (ROM), a random access memory (RAM), a magnetic disk or an optical disk.

As shown in Fig. 10, an embodiment of the disclosure provides a terminal, which is the first terminal, including: a memory 1020, a transceiver 1000, and a processor 1010; the memory 1020 is used to store a computer program; the processor 1010 is used to read the computer program stored in the memory; the transceiver 1000 is used to transmit and receive data under control of the processor 1010 and perform the following steps:
transmitting resource information and/or configuration information of PRS to a second terminal, wherein the second terminal is in communication with the first terminal via a direct communication interface;
transmitting the PRS to the second terminal at the resource location indicated by the resource information and/or configuration information.

Optionally, the transceiver is specifically configured to:
transmit a first target signaling to the second terminal, wherein the first target signaling includes the resource information and/or configuration information;
the first target signaling includes one of the following:
   Sidelink Location Protocol (SLPP) signaling;
   PC5-S signaling;
   PC5 Radio Resource Control (RRC) signaling;
   Media Access Control (MAC) control element (CE); or,
   Sidelink Control Information (SCI).

Optionally, the transceiver is further configured to:
receive feedback information from the second terminal, wherein the feedback information is transmitted by the second terminal upon receiving the resource information and/or configuration information.

Optionally, the resource information and/or configuration information include at least one of the following:
identifier of the PRS;
frequency domain resource information of the PRS;
time domain resource information of the PRS;
transmission period of the PRS;
offset of the PRS;
type of PRS resource;
identifier of the bandwidth part (BWP) where the PRS resource is located;
activation time of the PRS;
valid duration of the PRS;
Quasi co-location (QCL) information of the PRS.

Optionally, the transmission manner of the resource information and/or configuration information includes one of the following:
unicast transmission;
multicast transmission; or,
broadcast transmission.

Optionally, the processor is configured to read the computer program stored in the memory and perform the following steps:
activating or deactivating a target PRS within the PRSs.

Optionally, the processor is configured to read the computer program stored in the memory and perform the following steps:
indicating activation of the target PRS through the resource information and/or configuration information;
transmitting a second target signaling to the second terminal, wherein the second target signaling indicates the activation of the target PRS; or,
indicating deactivation of the target PRS through the resource information and/or configuration information;
transmitting a second target signaling to the second terminal, wherein the second target signaling indicates the deactivation of the target PRS.

Optionally, the second target signaling includes at least one of the following information:
resource set identifier of the target PRS;
identifier of the target PRS;
identifier of the BWP where the resource of the target PRS is located;
spatial mapping relationship of the target PRS;
valid duration of the target PRS; or,
number of transmissions of the target PRS.

Optionally, the transceiver is further configured to:
receive measurement results and/or location information of the PRS transmitted by the second terminal.

It should be noted that, in Fig. 10, a bus architecture may include any number of interconnected buses and bridges, and connects various circuits including one or more processors represented by the processor 1010 and memory represented by the memory 1020. The bus architecture may also connect various other circuits such as peripherals, voltage regulators and power management circuits, which is well known in the art. Therefore, a detailed description thereof is omitted herein. A bus interface provides an interface. The transceiver 1000 may be multiple elements, i.e., a transmitter and a receiver, to allow for communication with various other apparatuses on the transmission medium. These transmission media include wireless channel, wired channel, optic fiber or the like. For different user equipment, the user interface 1030 may be an interface capable of externally or internally connecting a required device, and the connected device includes, but is not limited to: a keypad, a display, a speaker, a microphone, a joystick and the like. The processor 1010 is responsible for supervising the bus architecture and normal operation and the memory 1020 may store the data being used by the processor 1010 during operation.

Optionally, the processor 1010 may be a central processing unit (CPU), an application specific integrated circuit (ASIC), a field-programmable gate array (FPGA) or a complex programmable logic device (CPLD). The processor may also adopt a multi-core architecture.

The processor invokes a computer program stored in the memory and implements any one method provided in the embodiments of the present disclosure according to the obtained executable instructions. The processor and the memory may also be arranged physically separately.

It should be noted here that the above-mentioned terminal provided by the embodiments of the present disclosure can implement all the method steps implemented by the above-mentioned embodiment of the method performed by the terminal, and can achieve the same technical effect. Parts and beneficial effects in this embodiment that are the same as those in the method embodiment will not be described in detail here.

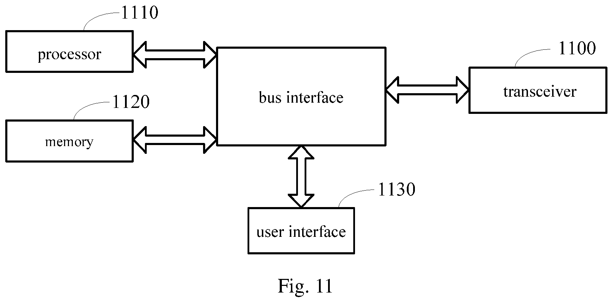

As shown in Fig. 11, an embodiment of the disclosure provides a terminal, which is the second terminal, including: a memory 1120, a transceiver 1100, and a processor 1110; the memory 1120 is used to store a computer program; the processor 1110 is used to read the computer program stored in the memory; the transceiver 1100 is used to transmit and receive data under control of the processor 1110 and perform the following steps:
receiving resource information and/or configuration information of PRS transmitted by a first terminal, wherein the first terminal is in communication with the second terminal via a direct communication interface;
receiving the PRS transmitted by the first terminal at the resource location indicated by the resource information and/or configuration information.

Optionally, the transceiver is configured to:
receiving a first target signaling transmitted by the first terminal, wherein the first target signaling includes the resource information and/or configuration information;
the first target signaling includes one of the following:
SLPP signaling;
PC5-S signaling;
RRC signaling;
MAC CE of the direct communication interface; or,
SCI.

Optionally, the transceiver is further configured to:
transmit feedback information to the first terminal.

Optionally, the resource information and/or configuration information include at least one of the following:
identifier of the PRS;
frequency domain resource information of the PRS;
time domain resource information of the PRS;
transmission period of the PRS;
offset of the PRS;
type of PRS resource;
identifier of the bandwidth part (BWP) where the PRS resource is located;
activation time of the PRS;
valid duration of the PRS;
Quasi co-location (QCL) information of the PRS.

Optionally, the processor is configured to read the computer program stored in the memory and perform the following steps:
determining to activate a target PRS corresponding to the resource information and/or configuration information; or
determining to deactivate a target PRS corresponding to the resource information and/or configuration information.

Optionally, the processor is configured to read the computer program stored in the memory and perform the following steps:
determining to activate the target PRS according to the resource information and/or configuration information;
receiving a second target signaling transmitted by the first terminal, and determining to activate the target PRS according to the second target signaling;
   or,
determining to deactivate the target PRS according to the resource information and/or configuration information;
receiving the second target signaling transmitted by the first terminal, and determining to deactivate the target PRS according to the second target signaling.

Optionally, the second target signaling includes at least one of the following information:
resource set identifier of the target PRS;
identifier of the target PRS;
identifier of the BWP where the resource of the target PRS is located;
spatial mapping relationship of the target PRS;
valid duration of the target PRS; or,
number of transmissions of the target PRS.

Optionally, the processor is configured to read the computer program stored in the memory and perform the following steps:
measuring the PRS and obtaining the measurement results of the PRS.

Optionally, the transceiver is further configured to:
transmitting measurement results and/or location information of the PRS to the first terminal, wherein the location information is obtained by the second terminal based on the measurement results.

Optionally, the processor is configured to read the computer program stored in the memory and perform the following steps:
establishing an association relationship between the measurement results and the first terminal.

It should be noted that, in Fig. 11, a bus architecture may include any number of interconnected buses and bridges, and connects various circuits including one or more processors represented by the processor 1110 and memory represented by the memory 1120. The bus architecture may also connect various other circuits such as peripherals, voltage regulators and power management circuits, which is well known in the art. Therefore, a detailed description thereof is omitted herein. A bus interface provides an interface. The transceiver 1100 may be multiple elements, i.e., a transmitter and a receiver, to allow for communication with various other apparatuses on the transmission medium. These transmission media include wireless channel, wired channel, optic fiber or the like. For different user equipment, the user interface 1130 may be an interface capable of externally or internally connecting a required device, and the connected device includes, but is not limited to: a keypad, a display, a speaker, a microphone, a joystick and the like. The processor 1110 is responsible for supervising the bus architecture and normal operation and the memory 1120 may store the data being used by the processor 1110 during operation.

Optionally, the processor 1110 may be a central processing unit (CPU), an application specific integrated circuit (ASIC), a field-programmable gate array (FPGA) or a complex programmable logic device (CPLD). The processor may also adopt a multi-core architecture.

The processor invokes a computer program stored in the memory and implements any one method provided in the embodiments of the present disclosure according to the obtained executable instructions. The processor and the memory may also be arranged physically separately.

It should be noted here that the above-mentioned terminal provided by the embodiments of the present disclosure can implement all the method steps implemented by the above-mentioned embodiment of the method performed by the terminal, and can achieve the same technical effect. Parts and beneficial effects in this embodiment that are the same as those in the method embodiment will not be described in detail here.

An embodiment of the present disclosure further provides a processor readable storage medium storing a computer program, wherein the computer program is configured to be executed by a processor, to implement the aforementioned positioning method. The processor readable storage medium may be any available medium or data storage device that can be accessed by the processor, including but not limited to magnetic storage (such as floppy disk, hard disk, magnetic tape, magnetooptical disk (MO)), optical storage (such as compact disc (CD), digital versatile disc (DVD), blue-ray disc (BD), holographic versatile disc (HVD)), and semiconductor memory (such as ROM, erasable programmable ROM (EPROM), electrically erasable programmable ROM (EEPROM), non-volatile memory (NAND FLASH), solid-state drive (SSD)), etc.

A person skilled in the art can understand that embodiments of the present disclosure may be provided as a method, system, or computer program product. Accordingly, the present disclosure may take the form of an entirely hardware embodiment, an entirely software embodiment, or an embodiment combining software and hardware aspects. Furthermore, the present disclosure may take the form of a computer program product configured to be implemented on one or more computer-usable storage media (including but not limited to disk storage, optical storage, etc.) storing computer-usable program codes therein.

The present disclosure is described with reference to flowcharts and/or block diagrams of methods, devices (systems), and computer program products according to the embodiments of the disclosure. It will be understood that each process and/or block in the flowcharts and/or block diagrams, and combinations of processes and/or blocks in the flowcharts and/or block diagrams, can be implemented by computer executable instructions. These computer executable instructions may be provided to the processor of a general-purpose computer, special purpose computer, embedded processor or other programmable data processing device to produce a machine, such that the instructions executed by the processor of the computer or other programmable data processing device produce an apparatus for implementing the functions specified in one or more processes in the flowcharts and/or one or more blocks in the block diagrams.

These processor-executable instructions may also be stored in a processor-readable storage capable of directing a computer or other programmable data processing device to operate in a specific manner, such that the instructions stored in the processor-readable storage produce an article of manufacture including instruction means, the instruction means implements the functions specified in one or more processes of the flowchart and/or one or more blocks of the block diagram.

These processor-executable instructions can also be loaded onto a computer or other programmable data processing device, so that a series of operational steps can be performed on the computer or other programmable device to produce a computer-implemented process, the instructions executed on the computer or other programmable devices thus provide steps for realizing the functions specified in one or more processes of the flowchart and/or one or more blocks of the block diagram.

The aforementioned apparatus embodiments are merely illustrative. The units described as separate parts may or may not be physically separate, and parts displayed as units may or may not be physical units, that is, may be located in one position, or may be distributed on a plurality of network units. A part or all of the units may be selected according to actual needs to achieve the objectives of the solutions of the embodiments, which can be understood and implemented by those of ordinary skill in the art without creative efforts.

It should be further appreciated that, the above modules in the network device and the UE are divided merely on the basis of their logic functions, and in actual use, they may be completely or partially integrated into a physical entity, or physically separated from each other. These modules may be implemented by calling software through a processing element, or implemented in the form of hardware. For example, one module may be a processing element arranged separately, or integrated into a chip of the above-mentioned device. In addition, the module may be stored in the memory of the above-mentioned device in the form of a program code, and may be called and executed by a processing element of the above-mentioned device so as to achieve the above functions. The other modules may be implemented in a similar manner. All or parts of the modules may be integrated together or arranged separately. Here, the modules, units or assemblies may each of an Integrated Circuit (IC) having a signal processing capability. During the implementation, the steps of the method or the modules may be implemented through an integrated logic circuit of the processing element in the form of hardware or through instructions in the form of software.

For example, the above modules, units, sub-units or sub-modules may be one or more ICs capable of implementing the above-mentioned method, e.g., one or more Application Specific Integrated Circuits (ASICs), one or more Digital Signal Processors (DSPs), or one or more Field Programmable Gate Array (FPGA). For another example, when a certain module is implemented by calling a program code through a processing element, the processing element may be a general-purpose processor, e.g., a Central Processing Unit (CPU) or any other processor capable of calling the program code. These modules may be integrated together and implemented in the form of system-on-a-chip (SOC).

Such words as "first" and "second" involved in the specification and the appended claims are merely used to differentiate different objects rather than to represent any specific order. It should be appreciated that, the data used in this way may be replaced with each other, so as to implement the embodiments in an order other than that shown in the drawings or described in the specification. In addition, such terms as "include" or "including" or any other variations involved in the present disclosure intend to provide non-exclusive coverage, so that a procedure, method, system, product or device including a series of steps or units may also include any other elements not listed herein, or may include any inherent steps or units of the procedure, method, system, product or device. The expression "and/or" in the description and the appended claims is merely used to represent at least one of the objects before and after the expression. For example, "A and/or B and/or C" represents seven situations, i.e., there is only A, there is only B, there is only C, there are both A and B, there are both B and C, there are both A and C, and there are A, B and C. Similarly, the phrase "at least one of A or B" in the specification and the appended claims shall be understood as "there is only A, there is only B, or there are both A and B".

The above embodiments are for illustrative purposes only, but the present disclosure is not limited thereto. Obviously, a person skilled in the art may make further modifications and improvements without departing from the spirit of the present disclosure, and these modifications and improvements shall also fall within the scope of the present disclosure.

## Claims

1. A positioning reference signal (PRS) transmission method, comprising:
transmitting, by a first terminal, resource information and/or configuration information of PRS to a second terminal, where the second terminal is in communication with the first terminal via a direct communication interface; and
transmitting, by the first terminal, the PRS to the second terminal at the resource location indicated by the resource information and/or configuration information..

2. The method according to claim 1, wherein the transmitting resource information and/or configuration information of PRS to the second terminal comprises:
transmitting a first target signaling to the second terminal, wherein the first target signaling comprises the resource information and/or configuration information;
the first target signaling comprises one of the following:
Sidelink Location Protocol (SLPP) signaling;
PC5-S signaling;
PC5 Radio Resource Control (RRC) signaling;
Media Access Control (MAC) control element (CE); or,
Sidelink Control Information (SCI).

3. The method according to claim 1, wherein before transmitting the PRS to the second terminal, the method further comprises:
receiving feedback information transmitted by the second terminal, wherein the feedback information is transmitted by the second terminal upon receiving the resource information and/or configuration information.

4. The method according to claim 1, wherein the resource information and/or configuration information comprises at least one of the following:
identifier of the PRS;
frequency domain resource information of the PRS;
time domain resource information of the PRS;
transmission period of the PRS;
offset of the PRS;
type of PRS resource;
identifier of the bandwidth part (BWP) where the PRS resource is located;
activation time of the PRS;
valid duration of the PRS;
Quasi co-location (QCL) information of the PRS.

5. The method according to claim 1, further comprising:
activating or deactivating a target PRS within the PRSs.

6. The according to claim 5, wherein the activating or deactivating a target PRS within the PRSs comprises:
indicating activation of the target PRS through the resource information and/or configuration information;
transmitting a second target signaling to the second terminal, wherein the second target signaling indicates the activation of the target PRS;
or,
indicating deactivation of the target PRS through the resource information and/or configuration information;
transmitting a second target signaling to the second terminal, wherein the second target signaling indicates the deactivation of the target PRS.

7. The method according to claim 6, wherein the second target signaling comprises at least one of the following:
resource set identifier of the target PRS;
identifier of the target PRS;
identifier of the BWP where the resource of the target PRS is located;
spatial mapping relationship of the target PRS;
valid duration of the target PRS; or,
number of transmissions of the target PRS.

8. The method according to claim 1, further comprising:
receiving measurement results and/or location information of the PRS transmitted by the second terminal.

9. A PRS transmission method, comprising:
receiving, by a second terminal, resource information and/or configuration information of PRS transmitted by a first terminal, wherein the first terminal is in communication with the second terminal via a direct communication interface; and
receiving, by the second terminal, the PRS transmitted by the first terminal at the resource location indicated by the resource information and/or configuration information.

10. The method according to claim 9, wherein the receiving resource information and/or configuration information of PRS transmitted by the first terminal comprises:
receiving a first target signaling transmitted by the first terminal, wherein the first target signaling comprises the resource information and/or configuration information;
the first target signaling comprises one of the following:
SLPP signaling;
PC5-S signaling;
RRC signaling;
MAC CE of the direct communication interface; or,
SCI.

11. The method according to claim 9, wherein after receiving the resource information and/or configuration information of the PRS transmitted by the first terminal, the method further comprises:
transmitting feedback information to the first terminal.

12. The method according to claim 9, wherein the resource information and/or configuration information comprises at least one of the following:
identifier of the PRS;
frequency domain resource information of the PRS;
time domain resource information of the PRS;
transmission period of the PRS;
offset of the PRS;
type of PRS resource;
identifier of BWP where the PRS resource is located;
activation time of the PRS;
valid duration of the PRS; or,
QCL information of the PRS.

13. The method according to claim 9, further comprising:
determining to activate a target PRS corresponding to the resource information and/or configuration information; or,
determining to deactivate a target PRS corresponding to the resource information and/or configuration information.

14. The method according to claim 13, wherein the determining to activate a target PRS corresponding to the resource information and/or configuration information comprises:
determining to activate the target PRS according to the resource information and/or configuration information;
receiving a second target signaling transmitted by the first terminal, and determining to activate the target PRS according to the second target signaling;
the determining to deactivate a target PRS corresponding to the resource information and/or configuration information comprises:
determining to deactivate the target PRS according to the resource information and/or configuration information;
receiving the second target signaling transmitted by the first terminal, and determining to deactivate the target PRS according to the second target signaling.

15. The method according to claim 14, wherein the second target signaling comprises at least one of the following:
resource set identifier of the target PRS;
identifier of the target PRS;
identifier of the BWP where the resource of the target PRS is located;
spatial mapping relationship of the target PRS;
valid duration of the target PRS; or,
number of transmissions of the target PRS.

16. The method according to claim 9, further comprising:
measuring, by the second terminal, the PRS and obtaining the measurement results of the PRS.

17. The method according to claim 16, further comprising:
transmitting measurement results and/or location information of the PRS to the first terminal, wherein the location information is obtained by the second terminal based on the measurement results.

18. The method according to claim 16, further comprising:
establishing an association relationship between the measurement results and the first terminal.

19. A terminal, comprising: a memory, a transceiver, and a processor;
the memory is used to store a computer program; the processor is used to read the computer program stored in the memory; the transceiver is used to transmit and receive data under control of the processor and perform the following steps:
transmitting resource information and/or configuration information of PRS to a second terminal, wherein the second terminal is in communication with the first terminal via a direct communication interface; and
transmitting the PRS to the second terminal at the resource location indicated by the resource information and/or configuration information.

20. The terminal according to claim 19, wherein the transceiver is specifically configured to:
transmit a first target signaling to the second terminal, wherein the first target signaling comprises the resource information and/or configuration information;
the first target signaling includes one of the following:
Sidelink Location Protocol (SLPP) signaling;
PC5-S signaling;
PC5 Radio Resource Control (RRC) signaling;
Media Access Control (MAC) control element (CE); or,
Sidelink Control Information (SCI).

21. The terminal according to claim 19, wherein the transceiver is further configured to:
receive feedback information from the second terminal, wherein the feedback information is transmitted by the second terminal upon receiving the resource information and/or configuration information.

22. The terminal according to claim 19, wherein the resource information and/or configuration information comprises at least one of the following:
identifier of the PRS;
frequency domain resource information of the PRS;
time domain resource information of the PRS;
transmission period of the PRS;
offset of the PRS;
type of PRS resource;
identifier of the bandwidth part (BWP) where the PRS resource is located;
activation time of the PRS;
valid duration of the PRS; or,
Quasi co-location (QCL) information of the PRS.

23. The terminal according to claim 19, wherein the processor is configured to read the computer program stored in the memory and perform the following steps:
activating or deactivating a target PRS within the PRSs.

24. The terminal according to claim 23, wherein the processor is configured to read the computer program stored in the memory and perform the following steps:
indicating activation of the target PRS through the resource information and/or configuration information;
transmitting a second target signaling to the second terminal, wherein the second target signaling indicates the activation of the target PRS; or,
indicating deactivation of the target PRS through the resource information and/or configuration information;
transmitting a second target signaling to the second terminal, wherein the second target signaling indicates the deactivation of the target PRS.

25. The terminal according to claim 24, wherein the second target signaling comprises at least one of the following:
resource set identifier of the target PRS;
identifier of the target PRS;
identifier of the BWP where the resource of the target PRS is located;
spatial mapping relationship of the target PRS;
valid duration of the target PRS; or,
number of transmissions of the target PRS.

26. The terminal according to claim 19, wherein the transceiver is further configured to:
receive measurement results and/or location information of the PRS transmitted by the second terminal.

27. A terminal, comprising: a memory, a transceiver, and a processor;
the memory is used to store a computer program; the processor is used to read the computer program stored in the memory; the transceiver is used to transmit and receive data under control of the processor and perform the following steps:
receiving resource information and/or configuration information of PRS transmitted by a first terminal, wherein the first terminal is in communication with the second terminal via a direct communication interface; and
receiving the PRS transmitted by the first terminal at the resource location indicated by the resource information and/or configuration information.

28. The terminal according to claim 27, wherein the transceiver is configured to:
receive a first target signaling transmitted by the first terminal, wherein the first target signaling comprises the resource information and/or configuration information;
the first target signaling comprises one of the following:
SLPP signaling;
PC5-S signaling;
RRC signaling;
MAC CE of the direct communication interface; or,
SCI.

29. The terminal according to claim 27, wherein the transceiver is further configured to:
transmit feedback information to the first terminal.

30. The terminal according to claim 27, wherein the resource information and/or configuration information comprises at least one of the following:
identifier of the PRS;
frequency domain resource information of the PRS;
time domain resource information of the PRS;
transmission period of the PRS;
offset of the PRS;
type of PRS resource;
identifier of the bandwidth part (BWP) where the PRS resource is located;
activation time of the PRS;
valid duration of the PRS; or,
Quasi co-location (QCL) information of the PRS.

31. The terminal according to claim 27, wherein the processor is configured to read the computer program stored in the memory and perform the following steps:
determining to activate a target PRS corresponding to the resource information and/or configuration information; or
determining to deactivate a target PRS corresponding to the resource information and/or configuration information.

32. The terminal according to claim 31, wherein the processor is configured to read the computer program stored in the memory and perform the following steps:
determining to activate the target PRS according to the resource information and/or configuration information;
receiving a second target signaling transmitted by the first terminal, and determining to activate the target PRS according to the second target signaling;
or,
determining to deactivate the target PRS according to the resource information and/or configuration information;
receiving the second target signaling transmitted by the first terminal, and determining to deactivate the target PRS according to the second target signaling.

33. The terminal according to claim 32, wherein the second target signaling comprises at least one of the following:
resource set identifier of the target PRS;
identifier of the target PRS;
identifier of the BWP where the resource of the target PRS is located;
spatial mapping relationship of the target PRS;
valid duration of the target PRS; or,
number of transmissions of the target PRS.

34. The terminal according to claim 27, wherein the processor is configured to read the computer program stored in the memory and perform the following steps:
measuring the PRS and obtaining the measurement results of the PRS.

35. The terminal according to claim 34, wherein the transceiver is further configured to:
transmit measurement results and/or location information of the PRS to the first terminal, wherein the location information is obtained by the second terminal based on the measurement results.

36. The terminal according to claim 34, wherein the processor is configured to read the computer program stored in the memory and perform:
establishing an association relationship between the measurement results and the first terminal.

37. A positioning reference signal (PRS) transmission device, comprising:
a first transmitting unit for transmitting resource information and/or configuration information of PRS to a second terminal, where the second terminal is in communication with the first terminal via a direct communication interface; and
a second transmitting unit for transmitting the PRS to the second terminal at the resource location indicated by the resource information and/or configuration information.

38. A positioning reference signal (PRS) transmission device, comprising:
a first receiving unit for receiving resource information and/or configuration information of PRS transmitted by a first terminal, wherein the first terminal is in communication with the second terminal via a direct communication interface; and
a second receiving unit for receiving the PRS transmitted by the first terminal at the resource location indicated by the resource information and/or configuration information.

39. A processor readable storage medium storing a computer program, wherein the computer program is configured to be executed by a processor, to implement the PRS transmission method according to any one of claims 1 to 8, or implement the PRS transmission method according to any one of claims 9 to 18.
